# DEMANDE DE BREVET EUROPEEN

(11) **EP 3 112 954 A1**
(43) Date de publication de la demande: **04.01.2017**
(21) Numéro de dépôt: 15174302.8
(22) Date de dépôt: 29.06.2015
(51) Int. Cl.: G04D 3/00, G04B 19/04, G04B 19/10

(54) **PROCÉDÉ DE FABRICATION DE COMPOSANTS HORLOGERS POUR PIÈCES D'HORLOGERIE**

(71) Demandeur: Universo S.A., 2300 La Chaux-de-Fonds (CH)
(72) Inventeur: Rossier, Gérard, 2300 La Chaux-de-Fonds (CH)
(74) Mandataire: Giraud, Eric

(57) **Abrégé**

L'invention se rapporte à une bande métallique comprenant au moins un composant horloger formé dans la bande. Selon l'invention, le composant horloger est détachable et est retenu à la bande par au moins un point d'attache. L'invention concerne également un procédé de fabrication de composants horlogers pour pièces d'horlogerie, à partir d'une bande métallique, comprenant les étapes principales suivantes :
- percer les bords de la bande pour le guidage de la bande ;
- dérouler une portion de bande ;
- usiner au moins un composant horloger sur la portion de la bande ;
- détourer partiellement au laser le composant horloger sur la portion de bande de manière à laisser au moins un point d'attache ;
- visiter la portion de bande ;
- conditionner la portion de bande en vue de sa livraison.

## Description

### Domaine de l'invention

La présente invention concerne un procédé de fabrication de composants horlogers, et plus particulièrement les appliques destinées à être rapportées sur le cadran d'une pièce d'horlogerie au moyen de pieds de fixation pour remplacer tout ou partie des chiffres indiquant les heures. Un tel procédé peut également servir à la réalisation d'aiguille indicatrice.

L'invention concerne également une installation permettant un usinage des composants horlogers en offrant ainsi une plus grande liberté de choix des formes et une plus grande qualité de finition de l'état de surface des parties visibles.

### Arrière-plan de l'invention

Les appliques disposées sur le tour d'heures, ou sur des cadrans secondaires, sont le plus souvent réalisées par décalque, voire par sérigraphie en donnant l'impression d'avoir été imprimés. Ces appliques peuvent aussi être obtenues par matriçage de la surface inférieure du cadran, les parties en relief formant les appliques étant alors polies, vernies, ou recouvertes d'un pigment luminescent, comme décrit par exemple dans le brevet FR 2 308 133. Ces appliques peuvent également être des pièces rapportées sur le cadran en étant produites par étampage d'une plaque métallique puis collage, par exemple au moyen d'une colle durcissable à chaud, comme indiqué dans le brevet CH 506 111.

Lorsqu'on veut obtenir des pièces de grande qualité, en particulier lorsque le métal utilisé est un métal précieux, les appliques sont alors le plus souvent pourvues de pieds pour leur fixation sur le cadran par collage, soudage ou encore rivetage. Les appliques sont ébauchées par usinage ou étampées dans un profilé, puis repris pour facettage.

Le document EP 1 557 729 permet de répondre à ces problèmes. Cependant, le procédé décrit dans ce document nécessite beaucoup de manutention de la part des opérateurs, ce qui s'avère long et fastidieux étant donné la petite taille des pièces à manipuler.

### Résumé de l'invention

Un but de la présente invention est de pallier tout ou partie des inconvénients cités précédemment en fournissant un procédé et une installation pour la mise en oeuvre de ce procédé permettant de fabriquer des composants horloger de grande qualité plus rapidement en limitant les opérations manuelles.

A cet effet, l'invention concerne une bande métallique comprenant au moins un composant horloger formé dans la bande. Selon l'invention, le composant horloger est détachable et est retenu à la bande métallique par au moins un point d'attache.

Conformément à d'autres variantes avantageuses de l'invention :
- la bande comprend un détourage sur tout ou partie de la périphérie du composant horloger de manière à former au moins un point d'attache ;
- la largeur du détourage est comprise entre 0.02 mm et 0.010 mm ;
- le point d'attache peut présenter une hauteur inférieure à la hauteur du composant horloger ;
- le point d'attache présente une largeur comprise entre 0.02 mm et 0.010 mm ;
- le composant horloger est une aiguille, une roue, une ancre, un applique telle qu'un index, un logo, un chiffre romain, un chiffre arabe ou tout autre élément destiné à être rapporté sur un cadran de montre ;
- la bande métallique comprend un jeu de composants horlogers pour une pièce d'horlogerie.

L'invention concerne aussi un procédé permettant, à partir d'une bande métallique, de fabriquer par usinage au moins un composant horloger d'une pièce d'horlogerie. Le procédé comporte les étapes principales suivantes :
- se munir d'une bande métallique ;
- percer les bords de la bande pour le guidage de la bande ;
- dérouler une portion de bande ;
- usiner au moins un composant horloger sur la portion de la bande ;
- détourer partiellement au laser le composant horloger sur la portion de bande de manière à laisser au moins un point d'attache ;
- visiter la portion de bande ;
- conditionner la portion de bande en vue de sa livraison.

Le procédé comporte en outre des étapes secondaires suivantes :
- diamanter le composant horloger ;
- usiner au moins un logement pour déposer une matière luminescente ;
- galvaniser la portion de bande supportant les composants horlogers prédécoupés.

Conformément à d'autres variantes avantageuses de l'invention :
- l'usinage de l'applique est réalisé par le biais d'une opération fraisage par le dessus de la bande ;
- on usine un jeu d'appliques sur une même portion de bande pour un cadran déterminé ;
- la bande est en or, en alliage d'or, ou en laiton.

Ce procédé est mis en oeuvre grâce à une installation pour la fabrication de composants horlogers pour pièces d'horlogerie à partir d'une bande métallique comprenant :
- un magasin d'approvisionnement en bande métallique ;
- au moins une fraiseuse permettant l'usinage d'au moins un composant horloger ;
- au moins une diamanteuse de bande.

Grâce à ces caractéristiques, une telle bande en métal comprenant au moins un composant horloger formé dans la bande permet d'obtenir des composants horlogers plus rapidement en limitant, voire supprimant, les interventions d'un opérateur lors de la fabrication des composants horlogers.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue de dessus d'une bande recevant plusieurs appliques conformes à l'invention ;
- la figure 2a et 2b sont des vues détaillées d'une applique ;
- les figures 3a et 3b sont des vues en coupe d'une applique et de son point d'attache à la bande selon la ligne I-I de la figure 2a ;

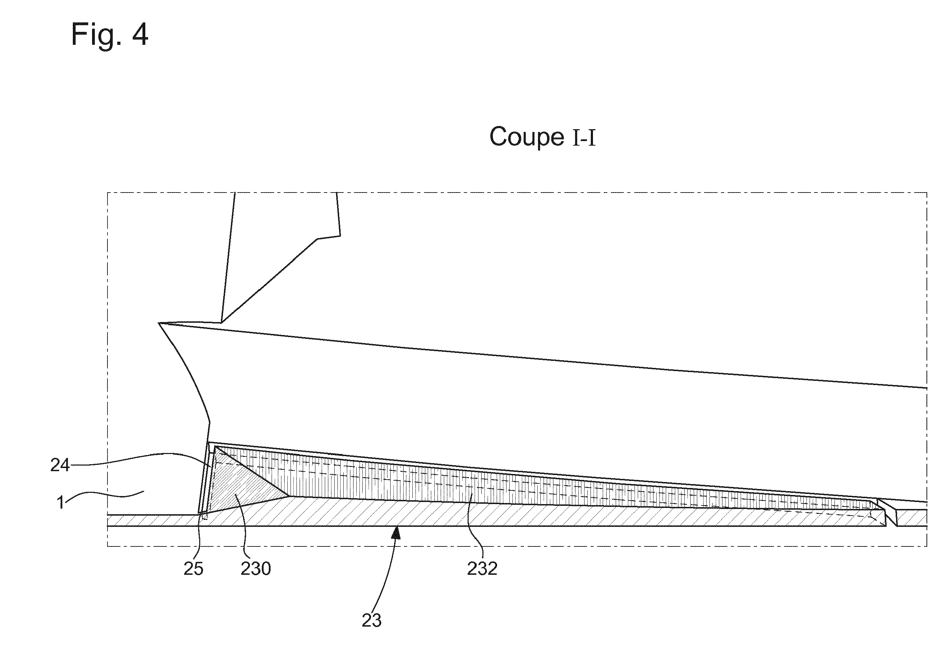

- la figure 4 est une vue en coupe en perspective d'une applique et de son point d'attache à la bande selon la ligne I-I de la figure 2a.

### Description détaillée des modes de réalisation préférés

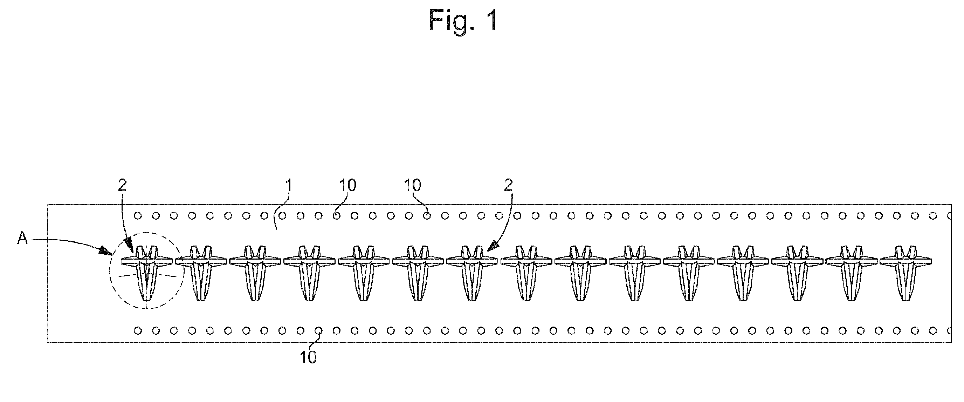

Une bande en métal, comprenant au moins un composant horloger formé dans la bande, conforme à l'invention va maintenant être décrite dans ce qui suit faisant référence conjointement aux figures 1, 2a, 2b, 3a et 3b.

Une telle bande est particulièrement intéressante pour la réalisation d'appliques et d'aiguilles. Dans la suite de la description, on entend par applique tout élément destiné à être rapporté sur le cadran d'une montre, comme les index ou les logos.

Dans ce qui suit, et dans un souci de clarté, il est décrit une bande comprenant au moins une applique 23, à titre de simple illustratif et non limitatif. Une aiguille, ou une ancre auraient tout aussi bien pu être décrites.

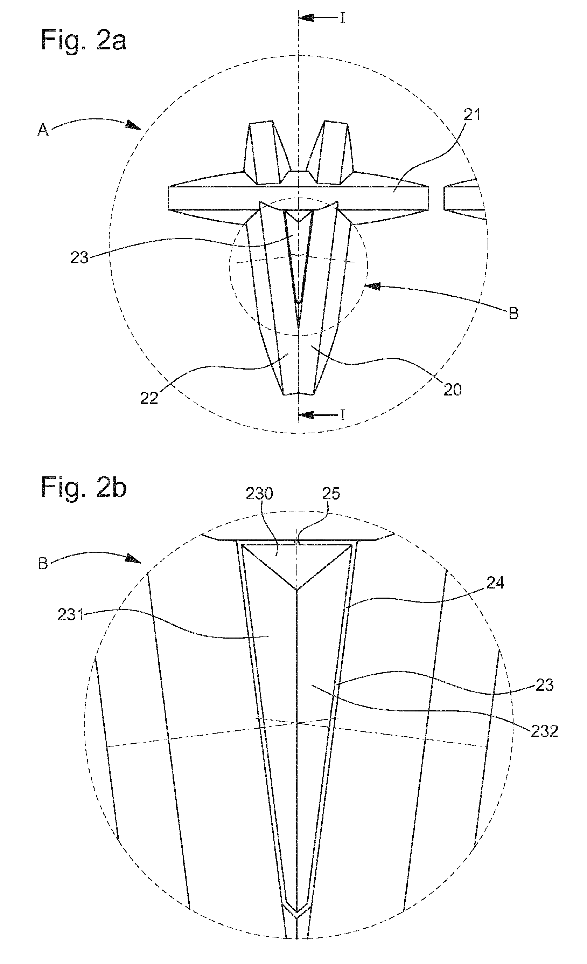

En se référant aux figures 2a et 2b on a représenté à très grande échelle une applique 23 formée par une base 230 formée par un premier triangle isocèle formant la partie inférieure de l'applique 23 et un deuxième et troisième faces 231, 232 sensiblement triangulaires et symétriques par rapport à la ligne médiane de l'applique 23 de manière à donner du relief à l'applique 23.

Selon un mode de réalisation particulier de l'invention, le dessous de l'applique 23 peut comporter deux pieds situés dans le plan médian de l'index et venant de matière avec la base de l'applique. Bien évidemment l'applique pourrait ne comporter qu'un seul pied, voire aucun pied. A titre purement indicatif, la longueur de l'index est de l'ordre de 4 mm, sa plus grande largeur de l'ordre de 1,20 mm et sa hauteur totale, pieds non compris, de l'ordre de 0.25 mm, de sorte que la bande 1 servant à sa fabrication peut avoir une épaisseur de 1 mm.

Comme on peut le voir sur les figures, l'applique 23 est obtenue à partir d'une ébauche 2 formée par des facettes 20, 21 et 22. Ces facettes 20, 21 et 22 peuvent être réalisées par le biais d'une opération de diamantage pour former l'applique 23.

Bien entendu, la forme de l'applique 23 n'est pas figée et peut varier en fonction des besoins de l'homme du métier.

Selon l'invention, la bande 1 présente un détourage 24 sur tout ou partie de la périphérie de l'applique 23, de manière à séparer l'applique 23 des facettes 20, 21 et 22. Préférentiellement, la largeur du détourage 24 est comprise entre 0.02 mm et 0.010 mm, et plus préférentiellement entre 0.03 mm et 0.06 mm. Tel que représenté sur les figures, le détourage 24 présente une largeur de 0.05 mm.

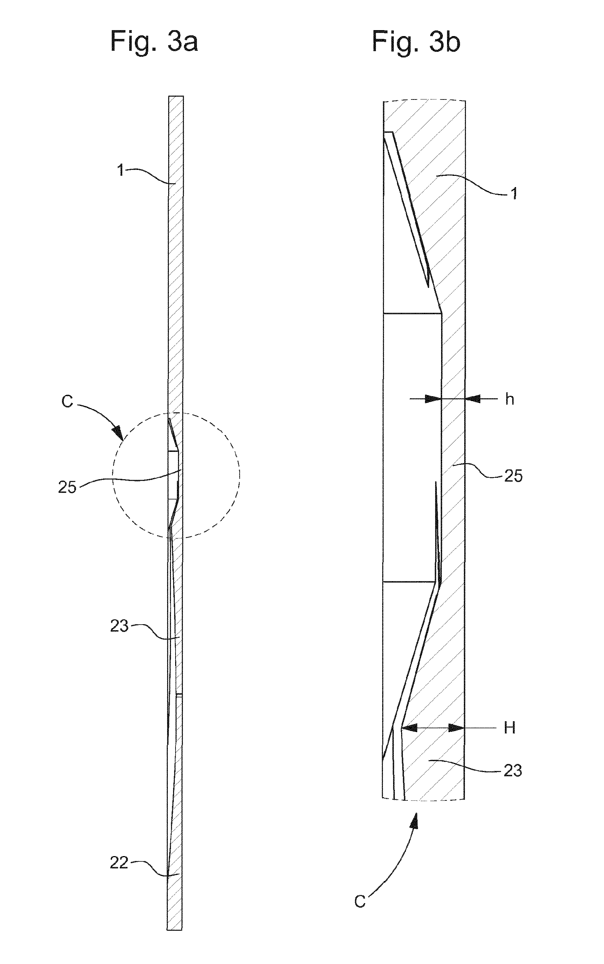

Comme on peut l'observer sur la vue en coupe aux figure 3a et 3b, le point d'attache 25 présente une hauteur h inférieure à la hauteur H de l'applique. La différence de hauteur permet d'une part, de détacher plus facilement l'applique 23 de la bande, et d'autre part, de galvaniser l'applique 23 partiellement au niveau du point d'attache 25. La hauteur h du point d'attache 25 peut, par exemple, être deux fois moins élevée que la hauteur H de l'applique. Dans l'exemple illustré sur les figures, l'applique présente une hauteur H de 0.25 mm et le point d'attache une hauteur h de 0.12 mm, soit une hauteur deux fois moins élevées. Suivant le composant horloger à usiner, la hauteur h du point d'attache 25 peut être identique à la hauteur H du composant horloger usiné sur la bande 1.

Avantageusement, le point d'attache 25 peut avoir une largeur identique à la largeur du détourage 24, soit 0.05 mm dans l'exemple illustré sur les figures.

Telle qu'illustrée sur les figures, l'applique 23 est un index horaire. Selon les besoins de l'homme du métier, l'applique peut être des chiffres romains ou arabes, une aiguille indicatrice, voire même un logo.

Selon un mode de réalisation particulier de l'invention, non illustré, la bande 1 comprend un jeu d'appliques, c'est-à-dire douze appliques 23 pour un cadran déterminé.

On décrit ci-après un mode d'exécution du procédé selon l'invention. La matière première pour fabriquer les appliques est constituée par une bande 1 de section rectangulaire. Il peut s'agir par exemple d'une bande en or, en laiton ou encore en un alliage d'or.

Dans une première étape, on effectue le perçage des bords de la bande 10 au moyen d'une étampe ou par usinage de manière à former les trous de guidage 10.

La bande est ensuite déroulée. Dans cette deuxième étape la bande 1 est guidée grâce aux trous de guidage 10.

Dans une troisième étape, on forme au moins une ébauche 2 sur une portion de la bande 1.

Dans une quatrième étape, au moins une ébauche 2 est formée sur la bande 1, on peut donner à l'ébauche 2 la forme désirée et effectuer le diamantage de toutes les surfaces visibles pour obtenir une applique 23.

Dans une cinquième étape, l'applique 23 est détourée partiellement au laser de manière à laisser au moins un point d'attache 25.

Les étapes suivantes concernent les opérations finales avant expédition. Dans une sixième étape, la bande 1 est visitée de manière à s'assurer de la bonne qualité de l'usinage de la ou des appliques 23. Dans une dernière étape la bande 1 est emballée par exemple au moyen d'un film plastique rétractable pour maintenir les appliques 23 en place en vue de leur expédition.

Sans sortir du cadre de l'invention, on peut envisager également d'autres étapes optionnelles, la première étape consistant alors à usiner au moins un pied pour l'applique 23, et la sixième étape consistant à galvaniser la bande 1 supportant les appliques 23 partiellement prédécoupées.

Selon l'invention, l'usinage de l'applique 23 peut être réalisé par le biais d'une opération de fraisage par le dessus de la bande 1. L'usinage de l'au moins un pied peut également être réalisé par le biais d'une opération de fraisage, par le dessous de la bande 1.

Selon une variante de l'invention, il est possible d'usiner un jeu d'appliques, c'est-à-dire douze index horaires, sur une même portion de bande 1 pour un cadran déterminé. De cette manière une portion de bande 1 correspond à la décoration d'un cadran de montre.

L'invention concerne également une installation pour la fabrication d'appliques 23 pour pièces d'horlogerie à partir d'une bande métallique 1. Selon l'invention, l'installation comprend :
- un magasin d'approvisionnement en bande métallique sur un rouleau par exemple ;
- au moins une fraiseuse permettant l'usinage d'au moins une applique et d'au moins un pied si nécessaire, la fraiseuse ayant plusieurs degrés de liberté ;
- au moins une diamanteuse de bande.

L'installation peut également comprendre un ou plusieurs bains galvaniques pour le traitement des appliques.

Bien entendu, la présente invention ne se limite pas à l'exemple illustré et est susceptible de diverses variantes et modifications qui apparaîtront à l'homme de l'art.

### NOMENCLATURE

1. Bande métallique,
10. Trous de guidage,
2. Ebauche,
20,21,22. Facettes,
23. Appliques,
230. Base,
231,232. Deuxième et troisième faces, 24. Détourage,
25. Point d'attache,
H. Hauteur de l'applique,
h. Hauteur du point d'attache.

## Revendications

1. Bande métallique (1) comprenant au moins un composant horloger formé dans la bande à partir d'une ébauche (2),
**caractérisé en ce que** le composant horloger est détachable et est retenu à la bande métallique (1) par au moins un point d'attache (25).

2. Bande métallique (1) selon la revendication 1, comprenant un détourage (24) sur tout ou partie de la périphérie du composant horloger.

3. Bande métallique (1) selon la revendication 1 ou 2, dans laquelle la largeur du détourage (24) est comprise entre 0.02 mm et 0.010 mm.

4. Bande métallique (1) selon l'une quelconque des revendications 1 à 3, dans laquelle le point d'attache (25) peut présenter une hauteur (h) inférieure à la hauteur (H) du composant horloger.

5. Bande métallique (1) selon l'une quelconque des revendications 1 à 4, dans laquelle le point d'attache (25) présente une largeur comprise entre 0.02 mm et 0.010 mm.

6. Bande métallique (1) selon l'une quelconque des revendications 1 à 5, dans laquelle le composant horloger est une aiguille, une roue, une encre, une applique (23) telle qu'un index, un logo, un chiffre romain, un chiffre arabe ou tout autre élément destiné à être rapporté sur un cadran de montre.

7. Bande métallique (1) selon l'une quelconque des revendications 1 à 6, comprenant un jeu de composants horlogers pour une pièce d'horlogerie.

8. Procédé de fabrication d'une bande métallique comprenant au moins un composant horloger pour pièces d'horlogerie comprenant les étapes principales suivantes :
- se munir d'une bande métallique (1) ;
- percer les bords de la bande métallique (1) pour le guidage de la bande métallique (1) ;
- dérouler une portion de bande métallique (1) ;
- usiner au moins un composant horloger sur la portion de la bande métallique (1);
- détourer partiellement au laser le composant horloger sur la portion de bande métallique (1) de manière à laisser au moins un point d'attache (25) ;
- visiter la portion de bande métallique (1) ;
- conditionner la portion de bande métallique (1) en vue de sa livraison.

9. Procédé de fabrication selon la revendication 8, comprenant en outre les étapes suivantes :
- effectuer un diamantage du composant horloger ;
- usiner au moins un logement pour déposer une matière luminescente ;
- galvaniser la portion de bande métallique (1) supportant les composants horlogers prédécoupés.

10. Procédé de fabrication selon la revendication 9, dans lequel l'usinage du composant horloger est réalisé par le biais d'une opération fraisage par le dessus de la bande métallique (1).

11. Procédé de fabrication selon l'une quelconque des revendications 8 à 10, dans lequel on usine un jeu de composants horlogers sur une même portion de bande métallique (1) pour une pièce d'horlogerie déterminée.

12. Procédé de fabrication selon l'une quelconque des revendications 8 à 11, dans lequel la bande métallique (1) est en or, en alliage d'or, ou en laiton.
